# EUROPÄISCHE PATENTSCHRIFT

(11) **EP 2 987 028 B1**
(45) Veröffentlichungstag und Bekanntmachung des Hinweises auf die Patenterteilung: **31.10.2018**
(21) Anmeldenummer: 13717767.1
(22) Anmeldetag: 16.04.2013
(51) Int. Cl.: G03B 37/04, G03B 17/56, G03B 35/08, G03B 43/00, H04N 5/225, H04N 5/232, H04N 5/247

(54) **JUSTIEREN EINES MULTI-KAMERASYSTEMS, MULTIKAMERASYSTEM UND JUSTIERHILFE**
ALIGNING OF A MULTI-CAMERA SYSTEM, MULTI-CAMERA SYSTEM AND ALIGNMENT AID
AJUSTAGE D'UN ENSEMBLE DE CAMERAS, ENSEMBLE DE CAMERAS ET GABARIT POUR AJUSTEMENT

(43) Veröffentlichungstag der Anmeldung: 24.02.2016
(73) Patentinhaber: Fraunhofer Gesellschaft zur Förderung der angewandten Forschung E.V., 80686 München (DE)
(72) Erfinder: WEISSIG, Christian, 13156 Berlin (DE); FINN, Arne, 10367 Berlin (DE)
(74) Vertreter: Schenk, Markus
(86) Internationale Anmeldenummer: PCT/EP2013/057921
(87) Internationale Veröffentlichungsnummer: WO 2014/169952

(56) Entgegenhaltungen:
- WO-A1-2012/136388
- CN-U- 201 886 262
- US-A1- 2007 188 653
- US-A1- 2013 016 181

## Beschreibung

Die vorliegende Erfindung bezieht sich auf das Justieren von Kamerasystemen, Kamerasysteme sowie eine Justierhilfe für die Justierung von Kamerasystemen.

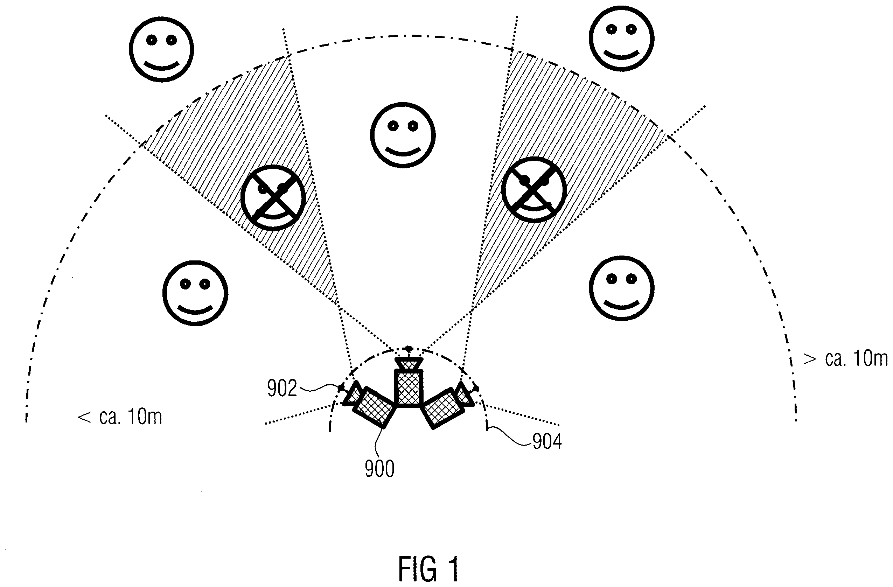

Ein Problem, das bei Kamerasystemen häufig vorkommt, sei zunächst anhand von Fig. 1 veranschaulicht. Fig. 1 zeigt ein Panoramakamerasystem mit Kameras 900, deren Eintrittspupillen 902 - hier der Einfachheit halber als jeweils vor dem Objektiv der Kamera 900 liegend dargestellt - auf einem gemeinsamen Kreis 904 angeordnet sind, so dass die Kameras 900 radial nach außen in unterschiedliche Richtungen schauen. Fig. 1 zeigt schraffiert kritische Zonen, bei denen Parallaxfehler auftreten, hervorgerufen durch einen zu großen Abstand der Eintrittspupillen 902 benachbarter Kameras 900 unabhängig davon, ob ein sternförmiger oder spiegelbasierter Aufbau für die Anordnung der Eintrittspupillen gewählt wird.

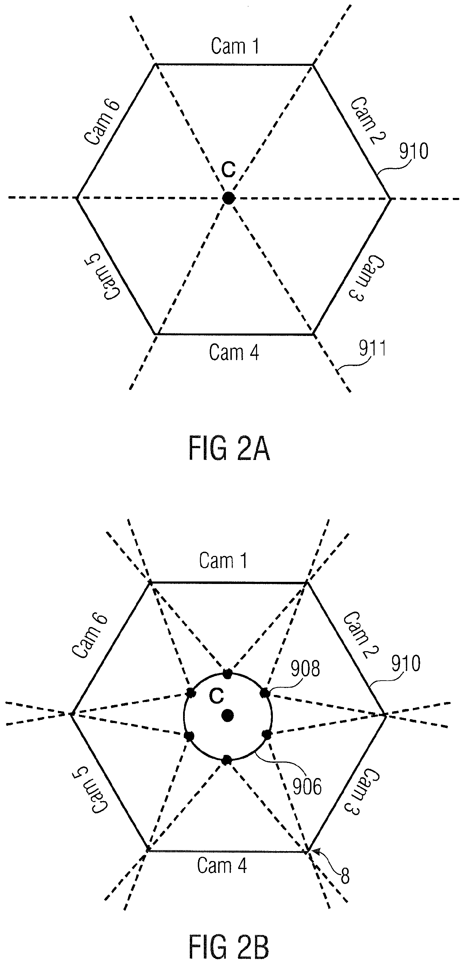

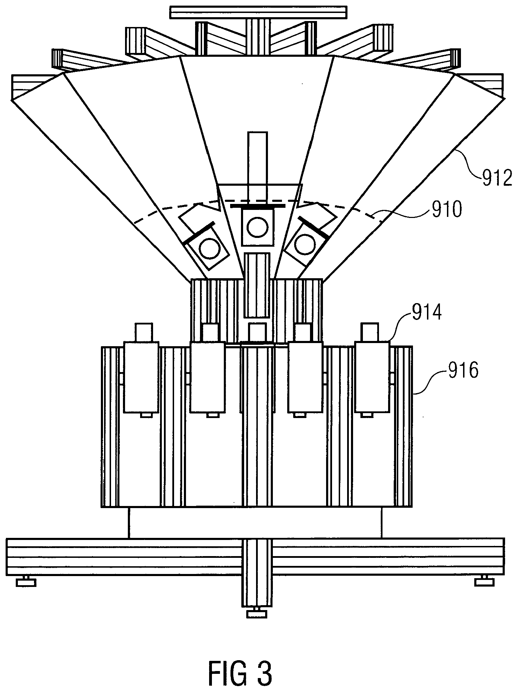

Üblicherweise wird ein Spiegelsystem verwendet. Damit ist es möglich, die virtuellen Eintrittspupillen aller Kameras, d.h. virtuelle Bilder der realen Eintrittspupillen, hinter den Spiegelsegmenten in einem gemeinsamen, virtuellen Kameramittelpunkt zu platzieren. Mit einer solchen Positionierung, die in Fig. 2A veranschaulicht ist, bei welcher mit C die gemeinsame Lage der virtuellen Eintrittspupillen angezeigt ist, sind parallaxfreie Aufnahmen möglich. Allerdings führt eben das Spiegelsystem dazu, dass die aufgenommenen Teilbilder der Kameras keine Überlappung aufweisen, was ein sauberes Zusammenfügen, d.h. Stitchen, der Teilbilder in der Praxis unmöglich macht. In früheren Anwendungen, wie z.B. in Themenparks, wurde dies durch eine segmentierte, nicht zugängige Leinwand umgangen, wodurch die Notwendigkeit einer nahtlosen Bildgenerierung umgangen wurde. Neuere Systeme verwenden dagegen einen Kompromiss in der Technik, bei dem alle Kameras so platziert werden, dass die virtuellen Eintrittspupillen auf einem kleinen Kreis um den angestrebten optimalen Mittelpunkt liegen. Dies ist in Fig. 2B dargestellt, wo der Kreis um den gemeinsamen Mittelpunkt C mit 906 dargestellt ist, die virtuellen Eintrittspupillen mit dem Bezugszeichen 908 versehen sind, und die Schnittlinie der Spiegelsegmente mit der Ebene, in der sich die virtuellen Eintrittspupillen 908 befinden, mit 910 angezeigt ist. Die Anordnung von Fig. 2B leidet also nicht an den Problemen in den radialen Richtungen 911, an denen die Spiegelsegmente aneinandergrenzen, da die Teilbilder der Kameras die nötige Überlappung bekommen, und zwar ohne dass der resultierende Parallaxfehler zu nennenswerten Einschränkungen führt. Fig. 3 zeigt ein Raumbild des Panoramakamerasystems mit der Anordnung der virtuellen Eintrittspupillen gemäß Fig. 2B, wobei die Spiegelanordnung 912 und die zugehörigen Kameras 914 zu sehen sind.

Die Genauigkeit der Platzierung der Kameras und deren Eintrittspupillen bestimmt das Ausmaß der Parallaxe und damit im Wesentlichen die Präzision der nahtlosen Panoramagenerierung, d.h. des Stitchings. Parallaxfehler können nur unter bestimmten Einschränkungen in der aufzunehmenden Szene akzeptiert werden. Befinden sich in den Stitchingbereichen beispielsweise nur Objekte im Fernbereich, kann ein größerer Parallaxfehler hingenommen werden als bei Objekten im Nahbereich. Das entstehende Kriterium dabei ist, dass der daraus resultierende Parallaxfehler kleiner als ein Pixel ist. Um zur Einhaltung dieses Kriteriums den Parallaxfehler hinreichend klein zu halten, ist eine sehr genaue Platzierung der virtuellen Eintrittspupillen 908 nötig. Dies wiederum erfordert eine genaue Platzierung der Kameras und damit eine exakte und zeitaufwendige Kalibrierung, was mit zwei wesentlichen Nachteilen verbunden ist:
- Der sehr hohe Aufwand zur genauen mechanischen Platzierung der Kameras.
- Die Kameras müssen für alle Freiheitsgrade präzise bewegt und dauerhaft arretiert werden können.
- Die Lage der Drehpunkte für rotatorische Freiheitsgrade können nicht beliebig gewählt werden. Rotationszentren sollten idealerweise mit den Eintrittspupillen übereinstimmen.
- Die Änderung eines Freiheitsgrades sollte keine weitere Änderung anderer Freiheitsgrade zur Folge haben, d.h. die Freiheitsgrade sollten zueinander orthogonal sein.
- Die Freiheitsgrade sollten sich im Laufe der Zeit nicht ändern, insbesondere auch nicht durch Erschütterungen und thermische Einflüsse.
- Bestimmung und Kontrolle der gewünschten Position.
- Die genaue Position jeder einzelnen Kamera, die sich aus dem gewünschten virtuellen Mittelpunkt ergibt, lässt sich nicht ohne Weiteres direkt vermessen. Sie liegt üblicherweise innerhalb der Optik.
- Bei Einstellungen an der Optik kann sich die Lage der Eintrittspupillen ggf. ändern.
- Die genaue Position hängt zusätzlich noch von dem restlichen optischen System ab, wie z.B. Toleranzen der Spiegel.
- Die Festlegung und Kontrolle des gemeinsamen Mittelpunktes erfolgt indirekt über die visuelle Kontrolle anhand der Kamerabilder mithilfe aufwendiger Messtechnik.
- Bereits kleine Abweichungen und Winkelfehler haben gravierende Folgen und führen sehr schnell zu nicht tolerierbaren Parallaxfehlern.

Aus den obigen Forderungen ergeben sich ein sehr hoher apparativer Aufwand sowohl für das Kamerasystem als auch für die Einstellhilfen und ein hoher Zeitaufwand für die Kalibrierung. Die Einstellung und Kontrolle ist selbst bei optimalen apparativen Voraussetzungen nur mit Expertenwissen unter hohem Zeitaufwand möglich, was in der Praxis dem hohen Kostendruck von kommerziellen Produktionen entgegensteht, insbesondere für Live-Übertragungen.
Bei dem System von Fig. 3 beispielsweise sind alle Kameras 914 individuell an einem Halter 916 befestigt, um dort individuell in seiner Lage ausricht- und arretierbar zu sein. Beispielsweise ist auf diese Weise jede Kamera 914 individuell translatorisch in drei Raumrichtungen bewegbar, um die optische Achse drehbar und um zwei transversale Achsen kippbar. Die resultierenden sechs Achsverstellungen sind für alle Kameras 914 individuell durchzuführen. Es ist sehr aufwendig, um auf diese Weise die Konfiguration von beispielsweise derjenigen gemäß Fig. 2B zu erzielen.

CN 201 886 262 U zeigt eine Halterung für Kameras, die so konzipiert ist, dass die Kameras koplanar nach außen schauen, allerdings geneigt zu der rein radialen Ausrichtung. Gezeigt ist in US20130016181 A ein 360°-Panorama-Kamerasystem, bei dem die Kameras gemeinsam mit der Rückwand ihres Gehäuses auf einer Basisplatte aufliegen, um über Spiegelflächen eines kegelstumpfförmigen Spiegels die umliegende Szene panoramamäßig aufzunehmen.
Die Aufgabe der vorliegenden Erfindung besteht deshalb darin, ein Konzept zu schaffen, dass einen geringeren Aufwand zur Justage eines Kamerasystems ermöglicht.
Diese Aufgabe wird durch den Gegenstand der beigefügten unabhängigen Patentansprüche gelöst.
Der Kerngedanke der vorliegenden Erfindung besteht darin, erkannt zu haben, dass es möglich ist, die Justage eines Kamerasystems unaufwendiger zu gestalten, wenn ein Halter mit einer Mehrzahl von Anschlusstücken, die jeweils zur Verbindung, Passung oder Klemmung mit einem Gegenstück eines Kameragehäuses oder eines Objektivs ausgebildet sind, verwendet wird, und zwar ein Halter, der derart ausgeführt ist, dass die Anschlussstücke oder Haltermodule des Halters, in denen die Anschlussstücke starr oder lediglich an Rotationsachsen gehaltert sind, zueinander entlang zumindest einer gemeinsamen Raumrichtung starr zueinander gehaltert sind.

Der Halter kann als Justierhilfe dienen und somit lediglich bei der Justage des Kamerasystems eingesetzt werden, oder der Halter verbleibt in dem Kamerasystem auch nach der Justage bei Betrieb des Kamerasystems.

Gemäß Ausführungsbeispielen sind die Anschlussstücke Objektiv/Kameragehäuse-Schnittstelle-Anschlussstücke zur Verbindung mit jeweils einem Gegenstück eines Kameragehäuses oder eines Objektivs, bilden also zusammen mit dem jeweiligen Gegenstück beispielsweise - aber nicht ausschließlich - ein C-Mount, ein CS-Mount, ein PL-Mount-, ein Arri-Standard-, ein Arri-Bayonet-, Aeton-Universal-, B4-, BNCR-, S-, CA-, PV- oder FZ-Anschlusssystem, und der Halter ist nur für die Justage als Justierhilfe vorgesehen, oder die Anschlussstücke sind zur Passung mit einem jeweiligen der Objektive oder Anschlussstücke zur Passung oder Klemmung mit einer Objektiv/Kamera-Schnittstelle zwischen dem Objektiv und dem Kammergehäuse einer jeweiligen Kamera vorgesehen. Hierdurch wird die Lagegenauigkeit der Eintrittspupillen der Kameras erleichtert, da Objektive üblicherweise deutlich präziser gefertigt sind als Kameragehäuse.

Der Halter kann zwischen den Anschlussstücken starr ausgeführt sein, so dass die Anschlussstücke starr zueinander ausgerichtet sind, sowohl in Lage als auch in Orientierung. Gemäß weiteren Ausführungsbeispielen ist der Halter allerdings modular aus mehreren Haltermodulen aufgebaut.

Weitere bevorzugte Ausführungsformen der vorliegenden Anmeldung sind Gegenstand der abhängigen Patentansprüche. Bevorzugte Ausführungsbeispiele der vorliegenden Anmeldung werden nachfolgend Bezug nehmend auf die Zeichnungen näher erläutert, und denen
- Fig. 1: schematisch kritische Zonen eines Panoramakamerasystems zeigt, in denen Parallaxfehler durch einen zu großen Abstand der Eintrittspupillen benachbarter Kameras auftreten, wobei das Kamerasystem dem Typ von Fig. 2B entspricht;
- Fig. 2A und 2B: schematische Zeichnungen zur Veranschaulichung der optimalen Position von virtuellen Eintrittspupillen eines Spiegelkamerasystems gemäß zweier verschiedener Typen;
- Fig. 3: eine Raumansicht eines Spiegelkamerasystems des Typs von Fig. 2B;
- Fig. 4: eine schematische Raumansicht der Lage von Umlenkspiegelanordnung und Kameras eines Spiegelpanoramakamerasystems, das gemäß der vorliegenden Erfindung justiert werden bzw. sein kann;
- Fig. 5: eine Teilraumansicht des Halters gemäß einem Ausführungsbeispiel;
- Fig. 6: eine Schnittansicht durch ein Aufnahmestück des Halters von Fig. 5;
- Fig. 7: ein Flussdiagramm eines Kalibrierverfahrens gemäß einem Ausführungsbeispiel;
- Fig. 8: eine Raumansicht eines Panoramakamerasystems mit Veranschaulichung einer gegenseitigen Lage zwischen Halter und Umlenkspiegelanordnung gemäß einem Ausführungsbeispiel;
- Fig. 9: eine Raumansicht des Mehrkamerasystems von Fig. 8 mit an dem Halter befestigten Kameras;
- Fig. 10: eine Raumansicht einer schematisch dargestellten Arretierungsvorrichtung zur Arretierung einer justierten Zustands nach einer Entfernung einer Justierhilfe;
- Fig. 11A: eine Raumansicht eines Halters zur Ausbildung einer Justierhilfe gemäß einem Ausführungsbeispiel;
- Fig. 11B: eine Schnittansicht durch ein Anschlussstück des Halters von Fig. 11A;
- Fig. 11C: eine Schnittansicht durch ein Anschlussstück des Halters von Fig. 11A gemäß einem anderen Ausführungsbeispiel mit einem Bajonettverschluss anstelle eines Schraubgewindes;
- Fig. 12: eine Schnittansicht eines Anschlussstückes eines Halters gemäß einem weiteren Ausführungsbeispiel;
- Fig. 13: eine Schnittansicht eines Anschlussstückes eines Halters gemäß noch einem Ausführungsbeispiel;
- Fig. 14: eine schematische Raumansicht der Lage von Umlenkspiegelanordnung und Kameras eines 3d-Panorma-Spiegelpanoramakamerasystems, das gemäß der vorliegenden Erfindung justiert werden bzw. sein kann;
- Fig. 15: eine schematische Draufsicht auf einen modularen Halter gemäß einem Ausführungsbeispiel, geeignet für das System von Fig. 14;
- Fig. 16A und 16B: Seitenansichten auf ein Paar von Segmentabschnitten des Halters von Fig. 14 in Zuständen unterschiedlicher Verdrehung der Haltermodule von Fig. 14; und
- Fig. 17: eine Raumansicht eines Haltermoduls in modularer Ausführung für ein Stereokamerasystem gemäß einem Ausführungsbeispiel.

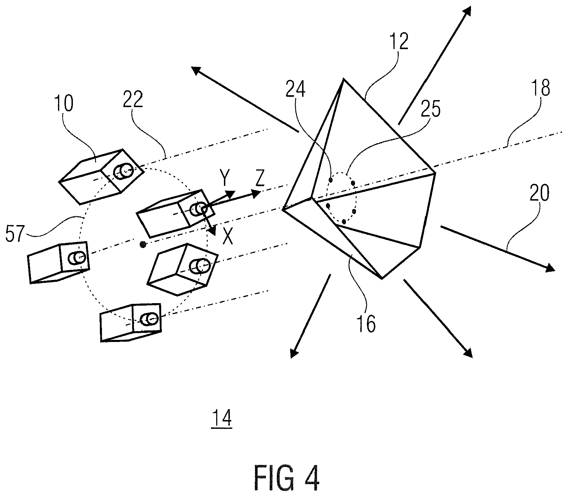

Um das Wesen der nachfolgend beschriebenen Ausführungsbeispiele und ihre Vorteile besser verstehen zu können, wird Bezug nehmend auf die Fig. 4 bis 7 zunächst einmal eine Möglichkeit für eine Kalibrierhilfe und ein dieselbe verwendendes Kalibrierverfahren für ein exemplarisches Spiegelkamerasystem beschrieben.

Eine schematische dreidimensionale Raumansicht des Spiegelkamerasystems ist in Fig. 4 dargestellt. Genauer ausgedrückt, stellt Fig. 4 die ideale Lagebeziehung der Kameras 10 und der Spiegelanordnung 12 des Kamerasystems 14 dar. Allerdings ist die Darstellung nicht maßstabsgetreu und Spiegelanordnung und Kameras sind weiter beabstandet gezeichnet als tatsächlich der Fall, um die Darstellung zu vereinfachen.

Bei dem Spiegelkamerasystem 14 handelt es sich hier exemplarisch um ein Kamerasystem zur Panorama-2D-Erfassung. Die Kameras 10 schauen über fünf Spiegelsegmente 16 der Spiegelanordnung 12 radial von einer gemeinsamen Achse 18 entlang radialer Blickrichtungen 20 nach außen, wobei die Anzahl fünf in Fig. 4 lediglich exemplarisch gewählt wurde und zwei oder mehr betragen kann. Auch muss das Kamerasystem nicht einen 360° Rundumblick ermöglichen.

Die Segmente 16 sind gegenüber der gemeinsamen Achse 18 geneigt, so dass sich ihre Flächennormalen bei rückwärtiger Verlängerung in einem gemeinsamen Punkt entlang der gemeinsamen Achse 18 schneiden. Jedem Segment 16 ist eine Kamera 10 zugeordnet. Bevorzugt liegt die optische Achse 22 jeder Kamera 10 in einer durch die Flächennormalen des zugeordneten Spiegelsegmentes 16 und die gemeinsame Achse 18 aufgespannten Ebene, um durch das zugeordnete Spiegelsegment 16 in die jeweilige Blickrichtung 20 umgelenkt zu werden. Der exemplarische Aufbau von Fig. 4 ist in Bezug auf Rotationen um die gemeinsame Achse 18 exemplarisch invariant gegenüber Drehungen um 360°/Anzahl der Kameras angeordnet, aber andere Konfigurationen wären ebenfalls denkbar. Zudem sind in Fig. 4 exemplarisch die optischen Achsen 22 der Kameras 10 parallel zu der gemeinsamen Achse 18 angeordnet, aber auch diese Konfiguration ist nicht zwingend.

In der idealen Einstellung gemäß Fig. 4 befinden sich die virtuellen Eintrittspupillen 24 der Kameras 10 auf einem Kreis 25, der symmetrisch um die gemeinsame Achse 18 verläuft, so dass die Konfiguration derjenigen von Fig. 2B entspricht.

Wie in der Beschreibungseinleitung der vorliegenden Anmeldung ausgeführt, ist es nun ziemlich schwierig, die Kameras 10 so zu platzieren, dass sie der optimalen Konfiguration von Fig. 4 entsprechen.

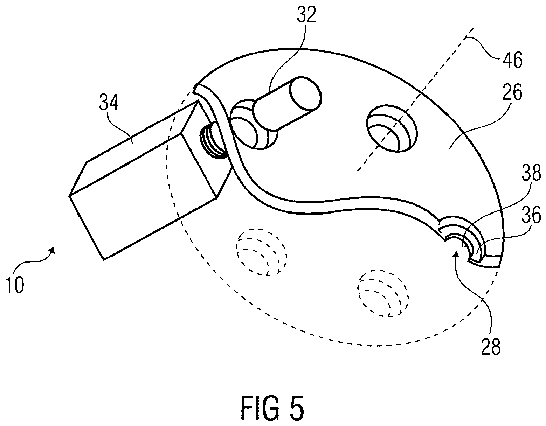

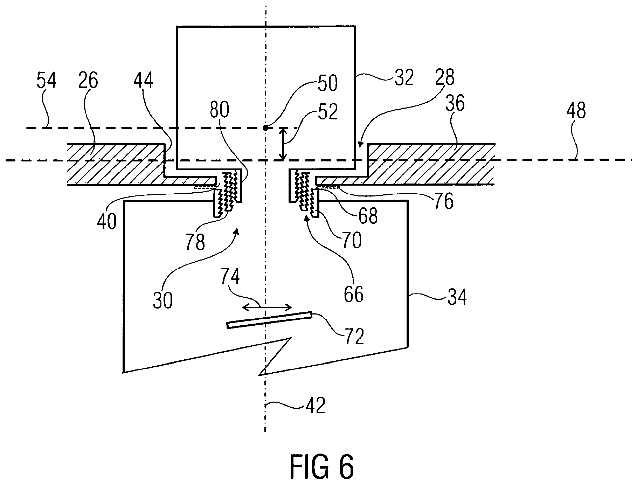

Gemäß der nun beschriebenen Vorgehensweise wird zur leichteren Justage eine Justierhilfe mit einem Halter gemäß Fig. 5 verwendet. Der Halter 26 ist hier exemplarisch plattenförmig ausgeführt, aber diese plattenförmige Ausführungsform ist nicht zwingend, sondern stellt lediglich eine materialsparende Ausführungsform dar. Der Halter 26 ist gemäß dem Ausführungsbeispiel von Fig. 5 zudem starr ausgeführt. Ein denkbares Material, aus dem der Halter 26 gebildet sein könnte, wäre beispielsweise Metall, Kunststoff, Kohlefaser, Holz, Keramik oder Glas. Der Halter 26 kann wie in Fig. 5 dargestellt einstückig ausgeführt sein oder aber aus mehreren Stücken bestehen, die aneinander lösbar oder irreversibel befestigt sind. Der Halter 26 umfasst eine Mehrzahl von Anschlussstücken 28, die jeweils zur Passung oder Klemmung mit einer Objektiv/Kamera-Schnittstelle 30 zwischen dem Objektiv 32 und dem Kameragehäuse 34 einer jeweiligen Kamera 10 ausgebildet sind, wie es in Fig. 6 gezeigt ist. Insbesondere zeigt Fig. 6 für ein Anschlussstück 28, dass letzeres einen flachen Abschnitt 36 mit einer Öffnung 38 aufweist, durch die hindurch das Kameragehäuse 34 mit dem Objektiv 32 verbunden werden kann. Das Spiel, mit dem die Objektiv/Kamera-Schnittstelle 30 durch die Öffnung 38 passt, kann klein gehalten sein, indem die Öffnungsgröße der Öffnung 38 auf eine Weite der Objekt/Kamera-Schnittstelle 30 ausgelegt ist, aber eine Notwendigkeit hierfür besteht nicht.

Durch Verbindung von Objektiv 32 und Kameragehäuse 34 über ihre Schnittstelle 30 liegt der flache Abschnitt 36 des Anschlussstückes 28 an Objektiv 32 und/oder Kameragehäuse 34 an. Ggf. ist der flache Abschnitt 36 dabei zwischen Objektiv 32 und Kameragehäuse 34 geklemmt, um in einer Richtung entlang einer Drehachse 42 der Objekt/Kamera-Schnittstelle 30, die üblicherweise mit der optischen Achse der Kamera 10 übereinstimmt, für Objektiv 32 und/oder Kameragehäuse 34 eine definierte Lagebeziehung aufzuweisen.

Wie es in Fig. 6 klargestellt ist, können die Anschlussstücke 28 jeweils eine Vertiefung oder Ausnehmung 44 zur Aufnahme des Objektivs 32, und/oder des Gehäuses 34, bei Aneinanderverbinden von Objekt 32 und Kameragehäuse 34 über ihre Schnittstelle 30 aufweisen. Die Ausnehmung 44 kann dabei so ausgebildet sein, dass sie die Einführung von Objektiv 32 bzw. Kameragehäuse 34 nur in einer bestimmten Drehposition relativ zur Drehachse 42 erlaubt. In Fig. 6 ist exemplarisch dargestellt, dass die Ausnehmung 44 zur Aufnahme des Objektivs 32 ausgelegt ist, aber wir bereits angedeutet wäre alternativ oder zusätzlich die Vorsehung einer entsprechenden Ausnehmung für das Kameragehäuse ebenfalls denkbar.

Es gilt im übrigen, dass, obwohl die Anschlusstücke 28 alle als identisch dargestellt ist, und diese Identische Ausgestaltung bevorzugt ist, die identische Ausgestaltung nicht zwingend gegeben sein muss. Beispielsweise könnten die Ausnehmungen in dem Fall keiner Passgenauigkeit auch unterschiedlich ausgebildet sein.

Da die Justierhilfe von Fig. 5 und 6 zur Justage des Systems von Fig. 4 ausgelegt ist, sind bei dem Halter von Fig. 5 und 6 die Anschlussstücke 28 rotationsinvariant gegenüber Drehungen um eine Achse 46 angeordnet, und Zentren der Anschlussstücke koplanar in einer Ebene 48, die senkrecht zur Achse 46 ist. Wenn das System von Fig. 4 kein Rundumpanoramasystem wäre und beispielsweise nicht alle Segment-Kamera-Paare aufweisen würde, dann wäre die Rotationsinvarianz zumindest paarweise für die Anschlussstücke erfüllt.

In dieser Form passt die Justierhilfe von Fig. 5 und 6 zur Konfiguration bzw. Anordnung der Kameras 10 in der optimalen Konfiguration von Fig. 4, denn durch die Auslegung der Anschlussstücke 28, wie in den Fig. 5 und 6 dargestellt, besitzen bei Verbinden von Objektiv 32 und Kameragehäuse 34 jeder Kamera 10 über eine jeweilige Öffnung 38 eines jeweiligen Anschlussstückes 28 die Eintrittspupillen 50 der Objektive 32 einen zwar unbekannten, aber für alle Objektive 32 gleichen Abstand 52 zur Ebene 48. Alle realen Eintrittspupillen 50 befinden sich also ebenfalls in einer Ebene, die parallel zur Ebene 48 der Anschlussstücke 28 liegt. Werden zusätzlich die Anschlussstücke 28 mit einer Passgenauigkeit gegenüber Objektiv 32 und/oder Kameragehäuse 34 in lateraler Richtung, d.h. Richtungen, die in der Ebene 48 verlaufen, versehen, kann durch exaktes Fertigen der Justierhilfe bzw. des Halters 26 auch erreicht werden, dass die Kameras 10 in dem Zustand, da dieselben durch die Anschlussstücke 28 über ihre Schnittstelle 30 zusammengefügt sind, ihre Eintrittspupillen 50 auch in der Ebene 54 ihrer Eintrittspupillen in einer korrekten lateralen Lagebeziehung zueinander aufweisen, nämlich entlang eines Kreises 57 in äquiangularer Anordnung, wie es in Fig. 4 veranschaulicht ist.

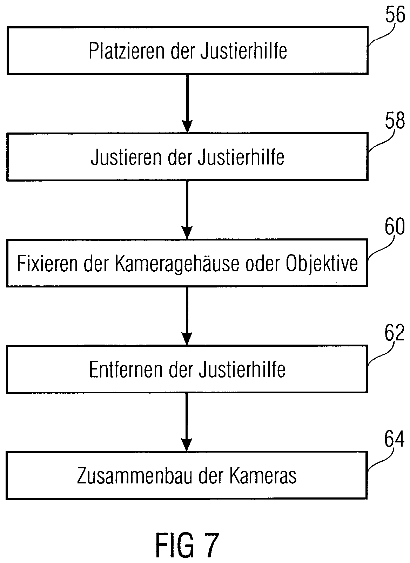

Ein Kalibrierverfahren gemäß der vorliegenden Anmeldung nutzt die Justierhilfe von Fig. 5 und 6 zur Justage des Systems von Fig. 4 gemäß der Vorgehensweise von Fig. 7 wie folgt aus.

Zunächst wird in einem Schritt 56 die Justierhilfe 26 platziert, so dass jede Kamera 10 durch die Öffnung 38 der Anschlussstücke 28 zusammengefügt sind.

Das Verfahren kann auch ein Justieren 58 der Justierhilfe bzw. des Halters 26 und der Umlenkspiegelanordnung 12 gegenüber einander aufweisen, aber dieser Schritt ist optional, denn schon der Schritt des Platzierens führt ja schon inhärent zu einer gegenseitigen Justage der Kameras und je nach Anwendung kann das schon ausreichend sein. Beispielsweise umfasst das Justieren 58 der Justierhilfe lediglich noch ein Justieren von Halter 26 und Umlenkspiegelanordnung 12 gegeneinander entlang der gemeinsamen Achse 18 auf, weil beispielsweise konstruktiv durch eine geeignete Führung sichergestellt ist, dass die Ebene 48 des Halters 26 senkrecht zur Achse 18 steht, d.h. die Achsen 18 und 46 aufeinander fallen, und dass Spiegelanordnung 12 und Halter 26 hinsichtlich Drehungen um die Achse 18 so zueinander ausgerichtet sind, dass Flächennormalen der Spiegelsegmente 16 und optische Achsen 22 der jeweils zugeordneten Kameras 10 jeweils in einer durch die gemeinsame Achse 18 führenden Ebene liegen. In diesem Fall führte das Verändern des Abstands zwischen Halter 26 und Umlenkspiegelanordnung 12 zu einer Veränderung des Radius des Kreises 25 um die gemeinsame Achse 18 herum, auf welchem die virtuellen Eintrittspupillen 24 der Kameras 10 liegen, wodurch auf einfache Weise die Parallaxe benachbarter Kameras 10 des Spiegelkamerasystems von Fig. 4 eingestellt werden konnte. Weitere Justagen wären nicht erforderlich, denn diese geschahen implizit im Schritt 56.
Die Justierhilfe von Fig. 5 und 6 könnte bei Betrieb des Kamerasystems in dem Kamerasystem verbleiben. Nachher werden aber noch Ausführungsbeispiele beschrieben, bei denen das nicht möglich ist oder aus anderen Gründen nicht gewünscht. Beispielsweise mag es aus gewissen Gründen gewünscht sein, die Justierhilfe vor dem Betrieb des Kamerasystems wieder zu entfernen. Fig. 7 zeigt deshalb, dass es möglich wäre, in einem Schritt 60 für jede Kamera Kameragehäuse 34 oder Objektiv 32 in ihrem miteinander über ein jeweiliges Anschlussstück 28 verbundenen Zustand zu fixieren, um daraufhin in einem Schritt 62 die Justierhilfe in dem so fixierten Zustand zu entfernen. In einem Schritt 64 könnten dann wieder die Kameras zusammengebaut werden, indem wieder Objektive 32 und Kameragehäuse 34 der Kameras 10 miteinander verbunden werden.
Obiges Ausführungsbeispiel machte sich also zunutze, dass in der Regel sowohl Kameragehäuse als auch Objektive an ihrer Verbindungsstelle 30, dem Objektiv-Mount, präzise gefertigt sind. Beispiele für solche Objektiv-Mounts sind beispielsweise ein C-Mount, ein CS-Mount oder ein PL-Mount. Solche Anschlusssysteme umfassen zumeist einen Bajonettverschluss oder, wie es in Fig. 6 mit dem Pfeil 66 angezeigt ist, ein Schraubgewinde. Der Grund für die präzise Fertigung ist zumeist, dass je nach Anwendung unterschiedliche Objektive verschiedener Hersteller zu den Kameras passen müssen. Das bedeutet, dass die Lage der Eintrittspupille 50 einer Optik 32 einen genauen Bezug zur Objektivauflage 68 (vgl. Fig. 6) hat. Dieser Bezug ist für alle Optiken 32 eines Typs gleich. Werden also für ein Mehrkamerasystem, wie z.B. dasjenige von Fig. 4, gleiche Objektive 32 verwendet, wird durch die Verwendung der Justierhilfe bzw. des Halters 26 die Lage der Eintrittspupillen 50 in einer gemeinsamen Ebene 54 sichergestellt.

Der Schritt 56 erzielt nun also, dass alle Kameragehäuse 34 mit einem festen Bezug zu ihrem Objektiv-Mount, d.h. ihrem eigenen Objektiv/Kamera-Schnittstelle-Anschlussstück, in Fig. 6 exemplarisch aus einem Innengewinde (70) bestehend, befestigt werden, indem nämlich gemäß dem Ausführungsbeispiel von Fig. 5 und 6 der Halter 26 zwischen Kameragehäuse 34 und Objektiv 32 jeder Kamera 10 geschraubt wird und damit die Anschlusstücke eingeklemmt werden. In dem Ausführungsbeispiel von Fig. 5 und 6 weist dazu jedes Anschlussstück 26 in einer Basisplatte für jede Kamera 10 eine Bohrung 38 mit beispielsweise gleichem Radius auf, die um einen gemeinsamen Mittelpunkt, nämlich dem Schnittpunkt aus Achse 46 und Ebene 48 für die einzelnen Spiegelsegmente 16 verteilt sind. Durch diese Platzierung 56 ergibt sich eine starre Verbindung, die auf Anhieb die wichtigste Forderung an einen Mehrkameraaufbau erfüllt, nämlich die im Rahmen der Fertigungstoleranzen der Objektive exakte XYZ-Position aller realen Eintrittspupillen 50 zueinander. Die klassische pyramidenförmige Anordnung der Spiegelsegmente 16, wie sie exemplarisch in Fig. 4 gezeigt wurde, im Sichtfeld der Kamera tut ihr übriges, so dass die Justage in Schritt 58 relativ einfach ist. Halter 26 und Umlenkspiegelanordnung 12 können entlang der gemeinsamen Achse 18 gegeneinander verschoben werden. Dadurch kann, wie zu Schritt 58 beschrieben, die Exzentrizität für alle Kameras 10 gleichzeitig in einem Arbeitsschritt auf den gewünschten Wert eingestellt werden, ohne dass dadurch die relativ zueinander perfekte Z-Ausrichtung der realen Eintrittspupillen 50, d.h. die Ausrichtung entlang der optischen Achse 42, verändert wird.

Dazu sei noch Folgendes ausgeführt. Im Rahmen der gegebenen Toleranzen der Optiken und der Spiegel sind mit der beschriebenen Vorgehensweise nach Fig. 7 und der Justierhilfe gemäß Fig. 5 und 6 sowohl die XY-Positionen, d.h. die Position transversal zur optischen Achse der jeweiligen Kamera, der realen als auch der virtuellen Eintrittspupillen 50, 26 absolut exakt vorgegeben und müssen auch nicht mehr verändert werden. Die XY-Positionen hängen nur von der Positionierung der Bohrungen 38 auf der Basisplatte 26 ab, da die Eintrittspupille 50 auf der Symmetrieachse 42 der Optik 32 liegt. Die Z-Position der realen Eintrittspupille 50, d.h. die Position entlang der von dem Spiegel nicht gespiegelten optischen Achse, hängt von der jeweiligen Konstruktion der Optik 32 ab. Für bestimmte Optiken 32 verschiebt sich diese Z-Position sogar in Abhängigkeit von der Fokuseinstellung. Die Z-Position der virtuellen Eintrittspupillen 24, d.h. die Lage derselben entlang der durch die Spiegelung an den Segmenten 16 gespiegelten optischen Achse, wird durch den Abstand zwischen Spiegelanordnung 12 und realer Eintrittspupille 50 bestimmt. Um unterschiedliche Optiken einsetzen zu können, und um die Exzentrizität an verschiedenen Szenen anpassen zu können, ist eine Verschiebung der Eintrittspupille entlang der Z-Achse wünschenswert. Diese Einstellbarkeit wird unter Zuhilfenahme des Halters 26 wie beschrieben deutlich vereinfacht.

Toleranzen, die noch auftreten können, resultieren aus nicht exakt positionierten Bildsensoren 72 in den Kameras 10. Fig. 6 zeigt einen Bildsensor 72 einer Kamera in einer hier exemplarisch relativ zur optischen Achse 42 verkippten Lage. Bildsensoren 72 können aber auch von Kameragehäuse zu Kameragehäuse in ihrem Z-Abstand zur Objektivauflage 68, d.h. ihrem Abstand zur Objektauflage 68 entlang der optischen Achse 42 versetzt angeordnet sein. Am häufigsten sind Deplatzierungen der Bildsensoren 72 in lateraler Richtung 74. Da die optische Achse 42 aber trotzdem durch die Eintrittspupille 50 führt, ändert sich dadurch nichts an der exakten Lage dieser Eintrittspupille 50, so dass dadurch keine Parallaxfehler entstehen. Lagefehler 74 der Bildsensoren äußern sich stattdessen in einem verschobenen Bildausschnitt (Lens Shift), der durch eine einfache Bildausschnittwahl bzw. einen elektronischen Sensorshift, korrigiert werden kann.

Sollte es trotzdem vorkommen, dass die Abstände 52 der realen Eintrittspupillen 50 der Objektive 32 der unterschiedlichen Kameras 10 in Z-Richtung, d.h. in der Richtung entlang der optischen Achse 42, variieren, so können diese Schwankungen durch Beilegen von Distanzscheiben, in Fig. 6 gestrichelt mit 76 angezeigt, - z.B. zwischen Abschnitt 36 und Kameraauflage 68 - individuell für jede Kamera 10 korrigiert werden, so wie es auch für die Einstellung des Auflagemaßes bei Kameras üblich ist. Das Einfügen solcher Distanzscheiben 76 individuell für die Kameras 10 erfolgt im Rahmen des Schrittes 56.

Die Montage des Halters 26 zwischen Kameragehäuse 34 und Objektiv 32 führt dazu, dass sich das Auflagemaß der durch Kameragehäuse 34 und Objektiv 32 jeweils gebildeten Kamera 10 verstellt, also der Abstand zwischen Kameragehäuse und Objektiv größer wird. Dem kann dadurch begegnet werden, dass die Materialstärke des Halters 26 im Bereich der Kameraauflage 68 reduziert wird, wie es bei dem Ausführungsbeispiel von Fig. 5 und 6 mit den flachen Abschnitten 36 gezeigt wurde. Einige Kameras 10 verfügen über eine ausreichende Verstellmöglichkeit für das Auflagemaß, In Fig. 6 ist ein solcher Fall dargestellt, indem bei dieser Objektiv/Kameragehäuse-Schnittstelle 30 ein mit einem Außen- und einem Innengewinde versehenes Zwischenstück 78 zwischen dem mit einem Innengewinde versehenen Anschlussstück 70 des Kameragehäuses 34 und dem mit einem Außengewinde versehenen Anschlussstück 80 des Objektivs 32 vorgesehen ist. Durch eine solche Verstellmöglichkeit kann die Materialstärke des Halters 26 in dem mit der Öffnung 38 versehenen Bereich 36 kompensiert werden.

Wird allerdings, wie in Fig. 7 mit den möglichen Schritten 62 und 64 dargestellt, der Halter 26 nicht zur Befestigung im Betrieb, sondern nur zur Montage bzw. zur Justage, d.h. als Justierhilfe benutzt, kann auf die soeben beschriebene Verstellbarkeit des Auflagemaßes verzichtet werden, indem die Kameras in der beschriebenen Weise mit den Objektiven an dem Halter 26 in dem Schritt 56 zwar befestigt und im Anschluss die Kameras an einer geeigneten Befestigung, wie z.B. mithilfe arretierbarer Gelenke, dauerhaft gesichert werden, nämlich im Schritt 60, dann aber zum Schluss der Halter 26 wieder entfernt wird. Die Kameras 10 bleiben je nach Qualität der Befestigung entsprechend ausgerichtet. Das Auflagemaß der Kameras bleibt hier unverändert. Letztere Vorgehensweise kann bei der Verwendung größerer und damit schwerer Kameras sowieso von Vorteil sein, da der Objektiv-Mount 30 bei solchen Kameras ggf. nicht das gesamte Kameragewicht der Kameras 10 tragen kann oder, anders herum, der Halter 26 ansonsten sehr massiv aufgebaut sein müsste.

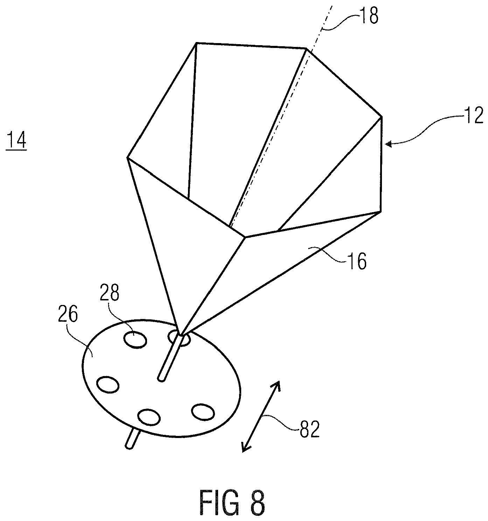

Der Vollständigkeit halber zeigt noch einmal Fig. 8 ein Beispiel für ein Panoramakamerasystem der Art von Fig. 5, bei dem der Halter 26 dazu vorgesehen sein kann, auch bei Betrieb des Panoramakamerasystems an seinen Anschlussstücken 28 zwischen Objektiv und Kameragehäuse der jeweiligen Kameras zu verbleiben. Lediglich exemplarisch weist Fig. 8 wieder fünf Paare eines Spiegelsegmentes 16 und jeweils zugeordnete Anschlussstücke 28 für eine jeweilige Kamera in einer äquiangularen Anordnung auf. Die Anzahl könnte natürlich auch anders sein, ebenso wie die Zwischenwinkel. Die Übersichtlichkeit halber sind die Kameras in Fig. 8 noch nicht dargestellt. Sie werden, wie in Fig. 7 beschrieben, im Rahmen des Schrittes 56 an den Anschlussstücken 28 durch die jeweilige Öffnung 38 hindurch zusammengefügt. Wie gesagt, kann das Kamerasystem 14 von Fig. 8 eine Führung aufweisen, über welche Umlenkspiegelanordnung 12 und Halter 26 gegeneinander verfahrbar sind. Die Führung stellt dabei ggf. sicher, dass die Symmetrieachse 46 des Halters 26 und die gemeinsame Achse 18 des Systems 14 kollinear verlaufen und die Segmente 16 nicht gegenüber den Anschlussstücken 28 um die Achse 18 gegeneinander verdreht sind bzw. werden. Die Führung mit der Verfahrbarkeit ist in der Fig. 8 mit dem Doppelpfeil 82 veranschaulicht. Die Führung könnte auf die gleiche Art und Weise natürlich auch Verkippungen der Ebene 48 gegenüber der gemeinsamen Achse 18 verhindern.

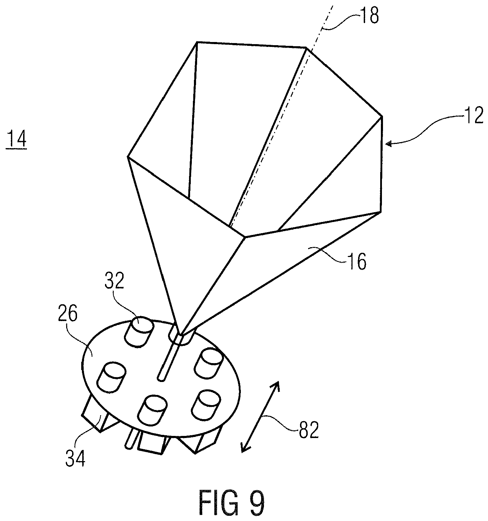

Fig. 9 zeigt das System von Fig. 8 lediglich der Vollständigkeit halber noch einmal in der Situation, wie sie sich nach Schritt 56 ergibt, d.h. in dem Zustand, da die Objektive 32 und Kameragehäuse 34 der Kameras 10 durch die Öffnungen 38 der Anschlussstücke 28 des Halters 26 miteinander verbunden sind. Fig. 9 kann somit ein fertig kalibriertes Kamerasystem darstellen oder einen Zwischenstand bei der Ausführung des Verfahrens nach Fig. 7, bei dem noch eine anderweitige Fixierung der Kameragehäuse oder der Objektive mit anschließender Entfernung der Justierhilfe erfolgt.

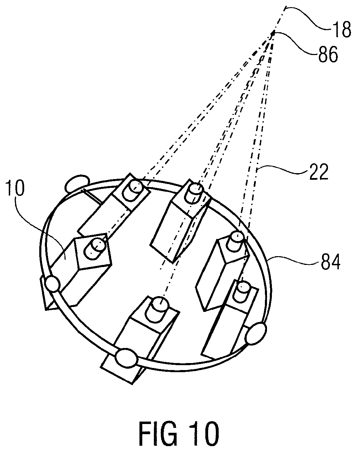

Fig. 10 soll beispielsweise veranschaulichen, dass Kameras 10 eines Mehrkamerasystems nach erfolgter Justage und anschließender Entfernung der Justierhilfe und Zusammenbau der Kameras 10 gemäß Fig. 7 in dem in Schritt 60 fixierten Zustand durch eine geeignete Halterungsvorrichtung 84 in dem justierten Zustand gehaltert sein können. Fig. 10 zeigt dabei exemplarisch auch, dass die Panoramakamerasysteme, wie sie in den bisherigen Fig. 4, 8 und 9 dargestellt worden sind, natürlich nicht darauf beschränkt sind, dass die optischen Achsen 22 der Kameras 10 parallel zueinander und zu der gemeinsamen Achse 18 verlaufen. Vielmehr können Sie sich in der Panoramaachse 18 beispielsweise in einem gemeinsamen Punkt 86 treffen. Je nach Neigung der Spiegelsegmente der Umlenkspiegelanordnung relativ zu der gemeinsamen Achse 18 können die optischen Achsen der Kameras 10 nach ihrer Umlenkung durch das jeweilige Spiegelsegment trotzdem koplanar in einer Ebene senkrecht zur Panoramaachse radial durch die Achse 18 verlaufen.

Im Folgenden sollen noch ein paar Erweiterungsmöglichkeiten und Alternativen zur obigen Beschreibung vorgestellt werden.

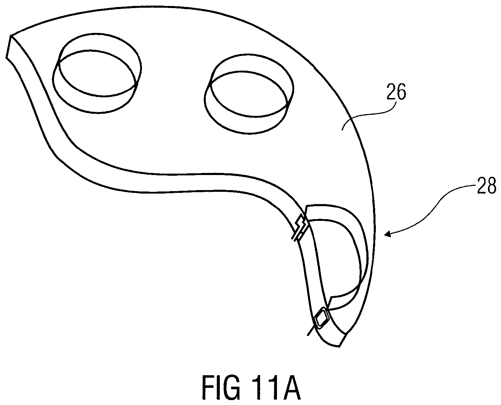

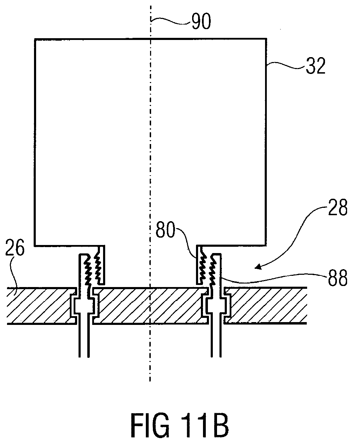

Fig. 11A und 11B zeigen beispielsweise eine Variante einer Justierhilfe, bei der der Halter 26 nicht einstückig ausgeführt ist, und die Justierhilfe nicht dazu vorgesehen ist, in dem justierten Kamerasystem zu verbleiben. Insbesondere sind die Anschlussstücke 28 des Halters 26 von Fig. 11A anders ausgelegt. Es handelt sich hier jeweils um Objekt/Kameragehäuse-Schnittstelle-Anschlussstücke 88, in dem Fall von Fig. 11B beispielsweise ein Anschlussstück 88 zur Verbindung mit einem Gegenstück 80 eines Objektivs 32, obwohl es andersherum ebenfalls möglich wäre. Die Anschlussstücke 88 sind hier in diesem Fall um eine Drehachse 90 drehbar gelagert. Die Anschlussstücke 88 sind also in dem Schritt 56 zur Verbindung mit dem Objektiv 32 drehbar und das gleiche gilt für die Entfernung der Justierhilfe in dem Schritt 62.

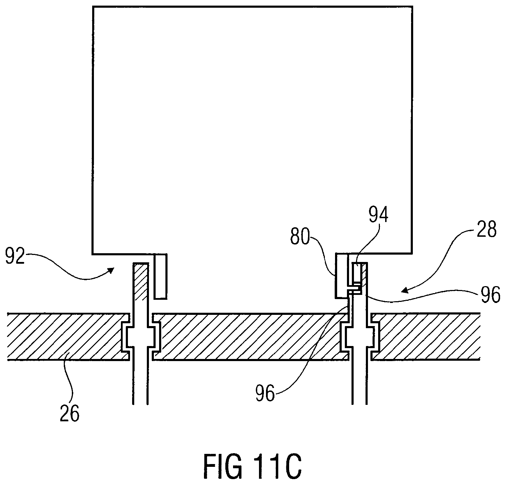

Gemäß Fig. 11B bildet das Objektiv/Kameragehäuse-Schnittstelle-Anschlussstück 88 zusammen mit dem Gegenstück 80 einen Schraubgewindeverschluss, aber Fig. 11C zeigt als eine Alternative, dass es sich auch um einen Bajonettverschluss 92 handeln könnte, bei dem das Anschlussstück 28 durch beispielsweise den eine Nut 94 aufweisenden Teil 96 und das Gegenstück 80 durch einen in der Nut 94 geführten Vorsprung 96 gebildet wird, oder umgekehrt. Das Schließen des der Verbindung geschieht über Verdrehung von Anschlussstück 88 und Gegenstück 80 entlang der Drehachse 90, die überlicher Weise kolinear zur optischen Achse der Kamera verläuft, gegeneinander und ebenso das Lösen der Verbindung.

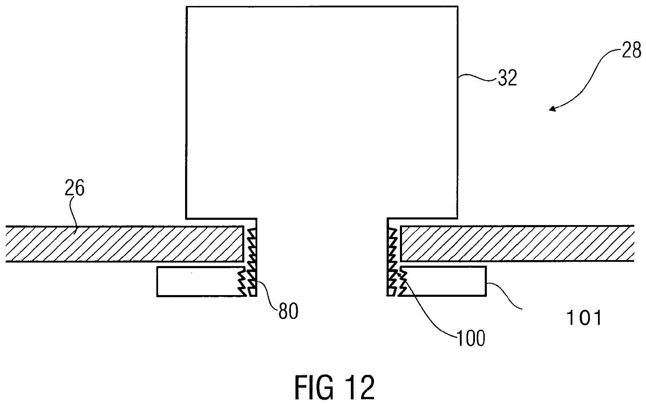

Fig. 12 wiederum zeigt, dass die Anschlussstücke 28 des Halters 26 lediglich Öffnungen 100 aufweisen können, durch die beispielweise ein Gegenstück 80 eines Objektivs 32 passt, um beispielsweise im Rahmen des Schrittes 56 zum Zwecke der besseren Handhabbarkeit bei der Platzierung und ggf. auch der Justage in Schritt 58 von einer dem Objektiv 32 aus gegenüberliegenden Seite festgehalten zu werden, wie z.B. mit einer Mutter 101, wenn es sich, wie in Fig. 12 exemplarisch dargestellt, bei dem Gegenstück 80 um ein mit einem Außengewinde versehenes, von dem Objektiv 32 zum Eindrehen in ein mit einem Innengewinde versehenes Gegenstück eines Kameragehäuses vorgesehenes Kameragehäuse/objektiv-Schnittstelle-Anschlussstück handelt.

Insbesondere bei kleinen Kameras/Objektiven könnte die Befestigung alternativ auch direkt am Objektiv erfolgen. Dabei könnte es beispielsweise ausreichend sein, die Objektive in den gemeinsamen Halter, z.B. eine Platte, einzupressen. Idealerweise geschieht dies nahe den Eintrittspupillen, wie dies in den vorhergehenden Ausführungsbeispielen der Fall war. Alternativ kann die Befestigung bzw. Passung aber auch direkt an der Kamera erfolgen, wenn diese über eine präzise Referenz zur Optik verfügt. Allgemein gilt, dass mit größerem Abstand zur Eintrittspupille der Optik, der aus den Fertigungstoleranzen resultierende Fehler steigt.

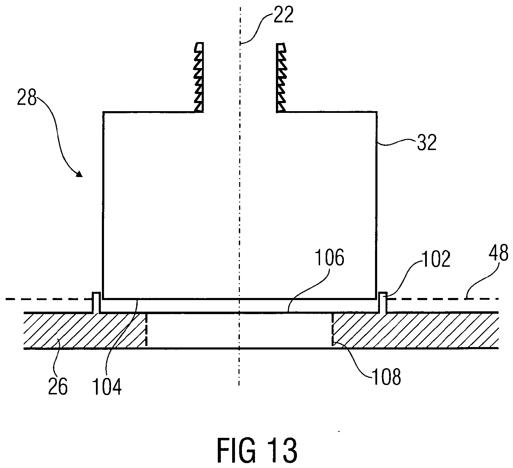

Fig. 13 zeigt beispielsweise, dass es möglich ist, die Anschlussstücke 28 des Halters 26 dadurch zu bilden, dass die Anschlussstücke Vorsprünge 102 zur Aufnahme oder Einpassung einer Vorderseite 104 eines jeweiligen Objektivs 32 aufzuweisen. Bei der Platzierung der Justierhilfe in Schritt 56 würden dann die Objektive 32 beispielsweise in die durch die Vorsprünge 102 gebildete Aufnahme des jeweiligen Anschlussstückes 28 eingefügt werden, um in lateraler Richtung, d.h. quer zur optischen Achse des Objektivs 32, durch den Vorsprung 102 fixiert zu sein, und in Richtung der optischen Achse 22 auf dem Halter 26 aufzuliegen. Anders ausgedrückt, bildete der Bereich des Halters 26 im Inneren des Vorsprungs 102 einen Anschlagbereich 106, der vorzugsweise so ausgebildet ist, dass bei Einfügen des Objektivs 32 mit seiner Vorder- bzw. Lichteintrittsseite 104 in die durch den Vorsprung 102 gebildete Aufnahme bis zur Berührung und Anstoßen an den Auflagebereich 106 die optische Achse 22 senkrecht zur Ebene 48 der gemeinsamen Zentren der Anschlussstücke 28 liegt. Ggf. könnte allerdings auch eine vordefinierte Verkippung des Auflagebereiches 106 bzw. der optischen Achse 22 im Zustand der Einfügung des Objektivs 32 gegenüber einer Normalen der Ebene 48 gewünscht sein. Ggf. werden die Objektive 32 noch irgendwie zusätzlich gehalten, um bei der Platzierung 56 nicht den Anschlag gegenüber den Anschlagbereich 106 zu verlieren. In der Version, wie sie in Fig. 13 dargestellt ist, könnte der Halter 26 entweder als Justierhilfe dienen, um vor Betrieb des entsprechenden justierten Kamerasystems wieder entfernt zu werden, oder als Halter zum Verbleib im Kamerasystem. In diesem Fall würde allerdings im Innenbereich des Auflagebereiches 106 eine Öffnung 108 vorgesehen sein, wie sie in Fig. 13 durch gestrichelte Linien veranschaulicht ist, durch die hindurch das Objektiv 32 bzw. die dasselbe aufweisende Kamera sehen könnte.

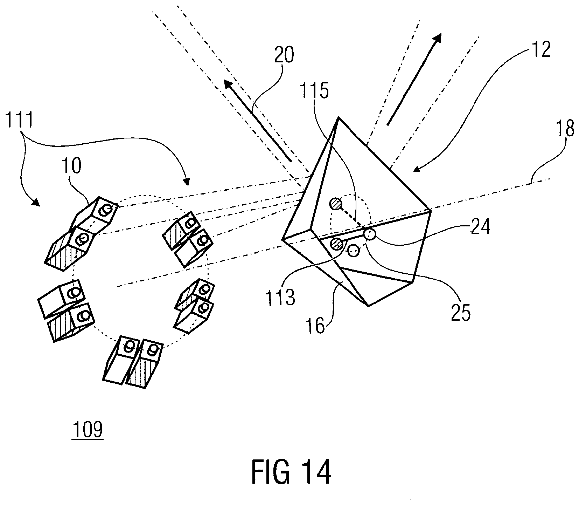

Bei den vorhergehenden Ausführungsbeispielen war der Halter im Wesentlichen starr aufgebaut, d.h. die Anschlussstücke 28 besaßen zueinander starre Positionen. Dies ist allerdings nicht gemäß allen Ausführungsbeispielen nötig. Dies soll im Folgenden anhand eines Ausführungsbeispiels für einen Halter beschrieben werden, der dazu geeignet sein könnte, zur Justage eines 3D-Panoramaspiegelkamerasystems verwendet zu werden. Ein solches 3D-Panoramaspiegelkamerasystem ist beispielsweise aus der WO 2012/136388 bekannt und exemplarisch in Fig. 14 als eine Erweiterung des Systems von Fig. 4 auf 3D-Panormaaufnahmen dargestellt. Bei diesem System 109 schauen in einem optimal justierten Zustand über ein jeweiliges Segment 16 der Umlenkspiegelanordnung 12 jeweils zwei Kameras 10, von denen die eine Kamera einem linken Kanal zugeordnet ist (schraffiert) und die andere Kamera 10 einem rechten Kanal (unschraffiert) nach außen. Die Kameras werden dabei optimalerweise so justiert, dass die virtuellen Eintrittspupillen 24 von Kameras 10 linker Kanäle (schraffiert) sowie die Eintrittspupillen von Kameras rechter Kanäle (unschraffiert) wieder auf einem gemeinsamen Kreis 25 um die gemeinsame Achse 18 liegen (in Fig. 14 exemplarisch nur für die zwei mit durchgezogenen Linien dargestellten Kamerapaare 111 dargestellt), und zwar so, dass der Basisabstand 113 jedes Kamerapaars, d.h. die Abstände der virtuellen Eintrittspupillen 24 der dem gleichen Segment 16 zugeordneten Kameras, in etwa gleich dem Abstand 115 zwischen der virtuellen Eintrittspupille 24 der Kamera des linken Kanals des Kamerapaars eines Segmentes zu der Eintrittspupille 24 der Kamera des rechten Kanals des Kamerapaars des zu diesem Segment radial nach außen schauend rechts dazu positionierten Segmentes sind. Auf diese Weise sind also die Basisabstände 113, 115 sowohl innerhalb jedes Segmentes als auch zwischen benachbarten Segmenten jeweils gleich und es ist möglich, 3D-Panoramaszenen zu erhalten, wie z.B. ein Panoramabild durch Stitchen aller Bilder aller Kameras der linken Kanäle sowie ein Panoramabild durch Stitchen aller Bilder der Kameras der rechten Kanäle, und trotzdem bleibt über den gesamten Panoramabereich hinweg die Basislänge konstant.

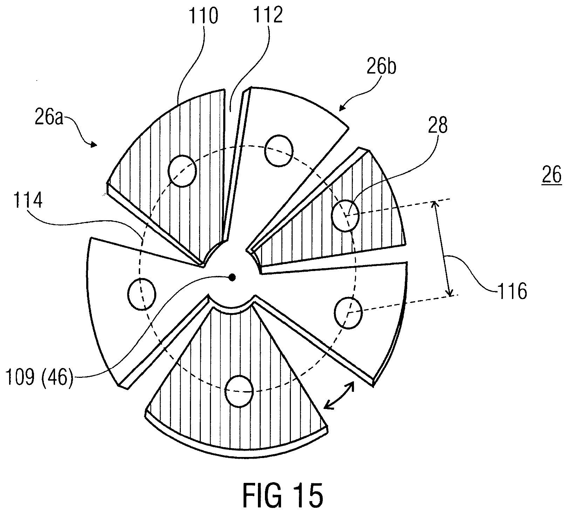

Auch für einen soeben skizzierten Aufbau gemäß Fig. 14 kann es wünschenswert sein, die Basislänge jeden Kamerapaares einstellen zu können. Der Halter 26 von Fig. 15 besitzt zwei zueinander um die Normale 46 zur Ebene der Anschlussstückzentren zueinander drehbar gelagerte Teile, von denen in der Aufsicht auf die Ebene der Anschlussstückzentren von Fig. 15 das eine Bauteil 26a schraffiert und das andere 26b ohne Schraffur dargestellt ist. Jedes Bauteil 26a und 26b ist jedes für sich starr oder einstückig ausgebildet und besitzt eine zu dem jeweils anderen Bauteil gleiche Anzahl an - hier exemplarisch drei - an Segmentabschnitten 110, in denen jeweils ein Anschlussstück 28 gebildet ist. Die Segmentabschnitte 110 wechseln die gemeinsame Drehachse 109 der Bauteile 26a und 26b umlaufend einander ab, so dass sich zwischen zwei Segmentabschnitten 110 des Bauteils 26a jeweils ein Segmentabschnitt 110 des Bauteils 26b und umgekehrt befindet. Die Segmentabschnitte 110 der beiden Bauteile 26a und 26b lassen in tangentialer Richtung Zwischenräume 112, so dass durch Drehung der beiden Bauteile 26a und 26b gegeneinander um die Drehachse 109 die Anschlussstücke 28 in ihrer lateralen Lage gegeneinander verändert werden können. Insbesondere sind die Anschlussstücke 28 wie in dem Fall von Fig. 5 auf einem gemeinsamen Kreis 114 angeordnet, der um die Drehachse 109 zentriert ist, und diese Lage auf dem Kreis 114 bleibt auch bei Drehung der Bauteile 26a und 26b gegeneinander um die Drehachse 109 erhalten. Allerdings ändern sich die Abstände 116 benachbarter Anschlussstückzentren. Sind nun beispielsweise die Anschlussstücke 28 des Bauteils 26a für die Kameras eines Kanals ausgelegt, und die Anschlussstücke 28 für die Kameras des jeweils anderen Kanals, dann kann über die Verdrehung der beiden Bauteile 26a und 26b gegeneinander die Basislänge 116 der Kamerapaare geändert werden, d.h. die Abstände der Anschlussstückzentren von Paaren benachbarter Segmentabschnitte 110. Trotz der Verdrehbarkeit um die Achse 109 wird durch das reine Platzieren der Justierhilfe gemäß Schritt 56 erzielt, dass die Eintrittspupillen der Kameras in einer gemeinsamen Ebene parallel zur Anschlussstückzentrenebene liegen. Auch die Anschlussstückzentrenabstände bleiben paarweise für benachbarten Anschlussstücke 28 gleich, und zwar für jeden Grad an Verdrehung zwischen den Bauteilen 26a und 26b, ohne dass hierzu weitere Justage notwendig wäre.

Das Ausführungsbeispiel von Fig. 15 ist ein Beispiel dafür, dass die Anschlussstücke 28 nicht notwendigerweise so ausgeführt sein müssen, dass bei Verbindung, Passung oder Klemmung mit Kameragehäuse und/oder Objektiv die optische Achse senkrecht zur Anschlussstückzentrenebene verläuft. Bei einem 3D-Panoramaspiegelkamerasystem der soeben skizzierten Art kann es vorn Vorteil sein, wenn jedes Kamerapaar in sein zugeordnetes Spiegelsegment schielend hineinblickt, in welchem Fall die Anschlussstücke 28 der ein Stereopaar bildenden Kameras in benachbarten Segmentabschnitten 110 die optischen Achsen so ausrichten würden, dass sie in Blickrichtung zueinander geneigt sind.

Fig. 15 ist also auch ein Beispiel dafür, dass der Halter 26 modular aus Haltermodulen gebildet sein kann. Die Haltermodule sind in dem Fall von Fig. 15 durch die Bauteile 26a und 26b gebildet.

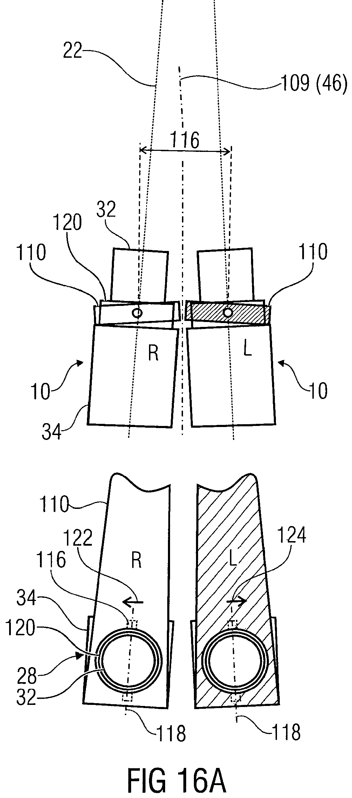

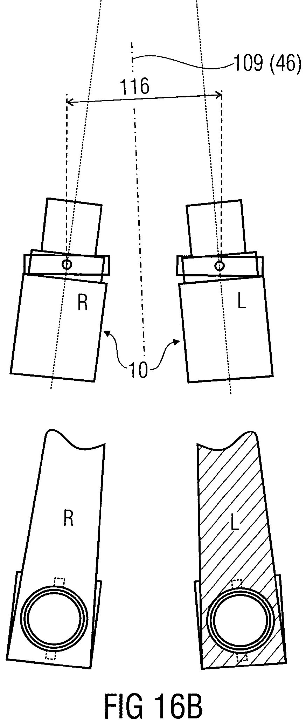

Fig. 16A und B zeigen ein Beispiel dafür, dass das Ausmaß der modularen Ausbildung des Halters noch erhöht werden könnte. Fig. 16A und 16B stellen unterschiedliche Drehungen der Bauteile 26a und 26b von Fig. 15 zueinander dar, d.h. unterschiedlich eingestellte Basislängen 116. Allerdings sind die Module 26a,b selbest modular ausgeführt. In der oberen Hälfte der Fig. 16A und 16B sind Ansichten dargestellt, wie sie sich ergeben, wenn man in der Mitte der Basislänge 116 von außen auf die Drehachse 109 schaut, und in der unteren Hälfte dieser Figuren ist die jeweilige Aufsicht parallel zur Achse 109 auf die jeweiligen Segmentabschnitte 110 gezeigt. Da sich bei Änderung der Basislänge 116 das dem jeweiligen Stereopaar von Kameras 10 zugeordnete Spiegelsegment für die Kameras 10 in unterschiedlichen Richtungen befindet, kann es wünschenswert sein, eine Neigung der optischen Achse 22 der Kameras 10 gegenüber der Anschlussstückzentrenebene bzw. der Normalen 46 dazu mit Änderung der Basislänge 116, d.h. Verdrehung der Module 26a bzw. 26b gegeneinander um die Achse 109, zu verändern. Hierzu ist jeder Segmentabschnitt noch einmal ebenfalls modular aufgebaut: jeder Segmentabschnitt 110 hält über ein Gelenk 116 schwenkbar um eine Schwenkachse 118 gelagert ein Haltermodul 120, das wiederum das Anschlussstück 28 des jeweiligen Segmentabschnittes 110 aufweist bzw. bildet. Gemäß dem Ausführungsbeispiel von Fig. 16A und 16B führt die Schwenkachse 118 in der Anschlussstückzentrenebene durch die Drehachse 109. Das Schielen der Kameras 10 eines Kamerapaars kann auf diese Weise verstellt werden. Es wäre möglich, die Verkippung der Kameras 10 des linken Kanals L und des rechten Kanals R innerhalb jedes Kamerapaares miteinander zu koppeln, so dass die zueinander ausgeführte Verkippung zum Schielen beispielsweise symmetrisch zu der durch die Drehachse 109 und die Mitte der Basislänge 116 führende Ebene ist. Die Schwenkachsen 116 könnten allerdings auch mit Absicht für jedes Kamerapaar symmetrisch zu der soeben genannten Ebene in der Ebene der Anschlussstückzentrenebene gegeneinander verdreht sein, wie es durch Pfeile 122 und 124 dargestellt ist, um wenigstens für eine vorbestimmte Drehlage zwischen Bauteil 26a und 26b zu ermöglichen, dass die optischen Achsen 22 der Kameras 10 jeden Stereokamerapaars koplanar zueinander liegen.

Und in einer weiteren, in Fig. 16A und 16B nicht näher dargestellten Weise, könnten selbst sogar die Gelenke 122 und 124 in einer Achse senkrecht zur Anschlussstückzentrenebene verdrehbar sein, um für jede Drehstellung der Bauteile 26a und 26b gegeneinander zu ermöglichen, dass die optischen Achsen 22 in einer Ebene liegen. Eine Kopplung der Drehung um letztgenannte Achsen könnte verwendet werden, die die Drehung der Bauteile 26a und 26b mit den Roll-Drehungen der Module 120 so zu koppeln, dass sich der Schielgrad abhängig von der Basislänge immer so ändert, dass sich das dem jeweiligen Kamerapaar zugeordnete Spiegelsegment im Gesichtsfeld beider Kameras diesen Kamerapaars befindet, und so dass die optischen Achsen 22 koplanar liegen.

Auch bei dem Ausführungsbeispiel von Fig. 16A und 16B sorgt der Halter 26 bereits inhärent für die koplanare Anordnung der realen Eintrittspupillen und damit für die Vorteile, die im Vorhergehenden bereits anhand der anderen Ausführungsbeispiele ausgeführt worden sind.

Die obigen Ausführungsbeispiele erzielten also die Überwindung einiger Probleme, die in der Beschreibungseinleitung noch bezogen auf bekannte Kamerasysteme und deren Justage beschrieben worden war. Die Objektiv-Mount-bezogene Befestigung gemäß obiger Ausführungsbeispiele über die Anschlussstücke 28 hat beispielsweise die folgende Wirkung. Die Montage der Kameras an ihrer Objektivauflage bewirkt, dass die Eintrittspupillen aller Kameras sich bei entsprechender Gestaltung des Halters an einer exakten Position befinden. Daraus ergeben sich einige Vorteile:
1) Es müssen keine aufwendigen Vorrichtungen zur mechanischen Einstellung der Kameras vorgesehen werden.
2) Das wiederum führt zu einer möglicherweise sogar drastischen Verkleinerung des Gesamtsystems, was eine deutlich einfachere Konstruktion erlaubt, da kleinere Kräfte und geringere Hebelwirkungen entstehen.
3) Außerdem ist keine aufwendige und fehlerträchtige Ausrichtung der Kameras vonnöten.
4) Zudem entfallen aufwendige Kalibrierungstools, wie sie in der Beschreibungseinleitung erwähnt worden sind.
5) Die präzise Einstellung kann sich nach der Montage bei den Ausführungsbeispielen, die oben beschrieben worden sind, auch nicht mehr verändern. Bisher führte das Vorhandensein von Verstellmöglichkeiten und das Spiel dieser dazu, dass Einstellungen nicht erhalten geblieben sind und insbesondere nach Transporten der Kameras eine erneute Einstellung nötig wurde.
6. Parallaxfreie Aufnahmen werden mit obigen Ausführungsbeispielen auch im Nachbereich möglich, was aufwendige Nachbearbeitungen erspart und Live-Anwendungen ermöglicht.

Eine zentrale Z-Verstellbarkeit im Sinne einer Verfahrbarkeit des Halters in einer Richtung senkrecht zur Ebene der Anschlussstückzentren erreicht eine zentrale Verschiebung der Umlenkspiegelanordnung zu den Kameras, wodurch eine gemeinsame Verstellung der Z-Position der virtuellen Eintrittspupillen erzielt wird. Die damit einhergehenden Vorteile sind:
1) Eine szeneabhängige Einstellung der Exzentrik erfolgt gemeinsam in einem Arbeitsschritt für alle Kameras.
2) Die Verschiebung entlang der Z-Achse erfolgt für alle Kameras gemeinsam.
3) Die präzise Ausrichtung der Eintrittspupillen auf der Z-Achse bleibt dadurch erhalten, die Z-Koordinaten aller Kameras sind gleich.
4) Bestimmte Optiken haben die Eigenschaft, dass sich bei Änderung der Fokusebene die Eintrittspupille auf der Z-Achse verschiebt. Diese Optiken waren bisher nicht geeignet für den Einsatz in präzisen Mehrkamerasystemen. Die zentrale Z-Verschiebung kann dazu genutzt werden, diese Verschiebung auszugleichen.

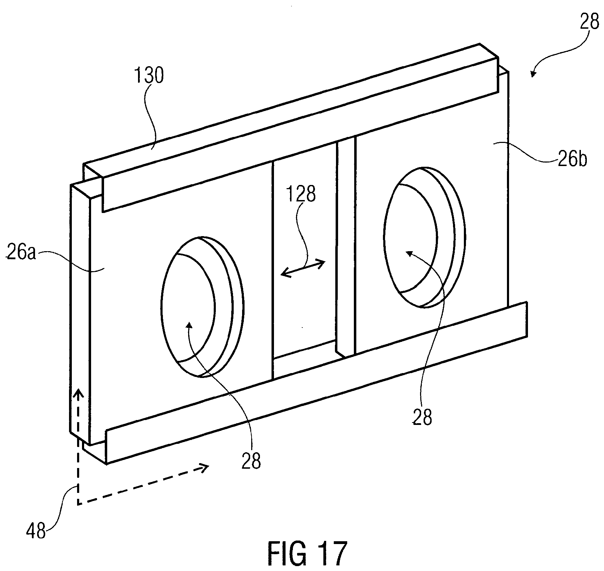

Die Art der Befestigung bzw. Ausrichtung an der Objektivauflage kann auch allgemein zur Montage von Mehrkamerasystemen verwendet werden, wie z.B. für achsparallele Stereosysteme. Hierfür ist lediglich eine einfache Verschiebung der geteilten Basisplatte sinnvoll, um eine Basisverstellung zu ermöglichen. Dies ist noch einmal in Fig. 17 veranschaulicht, bei der der Halter 26 zwei Haltermodule 26a und 26b aufweist, von denen jedes ein Anschlussstück 28 bildet bzw. aufweist, wobei die Module 26a,b in Anschlussstückzentrenebene 48 verschiebbar sind, und zwar hier so geführt, dass dieselben translatorisch verschiebbar sind, wie es mit einem Doppelpfeil 128 angedeutet ist. Die Führung ist mit 130 angezeigt.

Mit obigem Ausführungsbeispiel ist es also möglich, Kamerasysteme so zu kalibrieren, dass mit ihnen hochauflösende hochqualitative Aufnahmen erzeugbar sind. Insbesondere können hochauflösende Videopanoramen mit einem Mehrkamerasystem erzielt werden. Die Anwendungsgebiete obiger Ausführungsbeispiele sind nicht beschränkt auf die beschriebenen. Die Anwendungsgebiete sind beispielsweise Panoramaproduktionen für Themenparks und die Übertragung von Veranstaltungen, wie z.B. Konzerten und Sportveranstaltungen im Panoramaformat. Ein weiteres Anwendungsgebiet stellt die Produktion einer hochaufgelösten Gesamtansicht einer Szene dar, um daraus im Rahmen einer virtuellen Produktion virtuelle Kamerafahrten zuzulassen. Diese können sowohl offline als auch live durchgeführt werden. Je nach Anwendung kann diese Navigation zentral für mehrere oder alle Zuschauer erfolgen oder individuell, so dass jeder Nutzer seine eigene virtuelle Kamera führen kann. Möglich ist damit beispielsweise auch der einfache Aufbau von im einfachsten Fall achsparallelen Mehrkamerasystemen, wie es Bezug nehmend auf Fig. 17 angedeutet wurde.

Aus obiger Beschreibung ergeben sich noch folgende Ausführungsbeispiele.

Ein Verfahren zum Justieren eines Kamerasystems aus einer Mehrzahl von Kameras mit wechselbaren Objektiven umfasst beispielsweise das Platzieren (56) einer erfindungsgemäßen Justierhilfe, so dass die Mehrzahl von zueinander identischen Anschlussstücken jeweils eine Verbindung, Passung oder Klemmung mit einem Kameragehäuse oder einem Objektiv der Mehrzahl von Kameras aufweist. Dabei kann das Verfahren ferner ein Justieren (58) der Justierhilfe und einer Umlenkspiegelanordnung (12) gegeneinander aufweisen. Das Kamerasystem kann ein Spiegel-Panoramaaufnahmesystem sein.

Das oben beschriebene Kamerasystem mit einer Mehrzahl von Kameras mit wechselbaren Objektiven; und einem Halter mit einer Mehrzahl von zueinander identischen Anschlussstücken, die jeweils zur Verbindung, Passung oder Klemmung mit einem Gegenstück eines Kameragehäuses oder eines Objektivs einer Kamera ausgebildet sind, wobei der Halter derart ausgeführt ist, dass die Anschlussstücke oder Haltermodule des Halters, in denen die Anschlusstücke starr oder lediglich an Rotationsachsen gehaltert sind, zueinander entlang zumindest einer gemeinsamen Raumrichtung starr zueinander sind, kann eine Umlenkspiegelanordnung (12) aufweisen, und kann, zusätzlich oder alternativ, ein Panoramaaufnahmesystem sein.

## Patentansprüche

1. Justierhilfe für ein Kamerasystem aus Kameras mit wechselbaren Objektiven, mit
einem Halter (26) mit einer Mehrzahl von Anschlussstücken (28), die jeweils zur Verbindung oder Klemmung mit einem Kameragehäuse (34) und/oder Objektiv (32) ausgebildet sind, wobei der Halter (26) derart ausgeführt ist, dass die Anschlussstücke (28) oder Haltermodule (120) des Halters, in denen die Anschlusstücke (28) starr oder lediglich an Rotationsachsen (118) gehaltert sind, zueinander entlang zumindest einer gemeinsamen Raumrichtung (46) starr zueinander gehaltert sind,
**dadurch gekennzeichnet, dass** die Anschlussstücke (28) Objektiv/Kameragehäuse-Schnittstelle-Anschlussstücke (88) zur Verbindung mit jeweils einem Gegenstück (80) eines Kameragehäuses (34) oder eines Objektivs (32), oder Anschlusstücke (38; 100) zur Passung oder Klemmung mit einer Objektiv/Kameragehäuse-Schnittstelle zwischen dem Objektiv und dem Kameragehäuse einer jeweiligen Kamera sind.

2. Justierhilfe gemäß Anspruch 1, wobei der Halter (26) zwischen den Anschlussstücken (28) starr ausgeführt ist.

3. Justierhilfe gemäß Anspruch 1 oder 2, wobei die Anschlussstücke (28) symmetrisch oder paarweise um eine Rotationsachse (46) rotationsinvariant zueinander ausgerichtet sind und/oder Zentren der Anschlussstücke koplanar (48) angeordnet sind.

4. Justierhilfe gemäß einem der Ansprüche 1 bis 3, wobei die Anschlussstücke (28) zueinander identisch sind.

5. Justierhilfe gemäß einem der vorhergehenden Ansprüche, wobei die Kameras ein C-Mount-, ein CS-Mount-, ein PL-Mount-, ein Arri-Standard-, ein Arri-Bayonet-, Aeton-Universal-, B4-, BNCR-, S-, CA-, PV- oder FZ-Anschlusssystem aufweisen.

6. Justierhilfe gemäß Anspruch 1, bei der der Halter modular aus mehreren Haltermodulen (26a, 26b) aufgebaut ist, die jeweils ein oder mehrere zu den anderen Haltermodulen unterschiedliche der Anschlussstücke (28) aufweisen, wobei die Haltermodule so zueinander beweglich geführt sind, dass jedes Haltermodul seine Lage bei einer Projektion auf eine in der gemeinsamen Raumrichtung (46) verlaufenden Achse beibehält.

7. Justierhilfe gemäß Anspruch 1 oder 6, bei der der Halter modular aus mehreren Haltermodulen (26a, 26b) aufgebaut ist, die jeweils ein oder mehrere zu den anderen Haltermodule unterschiedliche der Anschlussstücke (28) aufweisen, wobei die Haltermodule so zueinander beweglich geführt sind, dass sich die Haltermodule bei der Bewegung zueinander parallel, kollinear und/oder koplanar zueinander bewegen.

8. Justierhilfe gemäß einem der Ansprüche 1, 6 und 7, bei der der Halter eine Basis aufweist, an der Haltermodule (120) über Gelenke (116) kippbar befestigt sind, die jeweils eines der Anschlussstücke (28) aufweisen, wobei die Basis so ausgebildet ist, dass Rotationsachsen(118) der Gelenke (116) in der gemeinsamen Raumrichtung (46) zueinander starr angeordnet sind.

9. Justierhilfe gemäß Anspruch 8, bei der die Basis so ausgebildet ist, dass die Rotationsachsen (118) der Gelenke (116) eine Symmetrie oder paarweise um eine Rotationsachse (46) Rotationsinvarianz zueinander ausweisen.

10. Justierhilfe gemäß Anspruch 8 oder 9, bei der die Basis modular ausgebildet ist, so dass die Haltermodule (120) in einer Richtung senkrecht zur gemeinsamen Raumrichtung bewegbar geführt sind.

11. Justierhilfe gemäß einem der Ansprüche 8 bis 10, bei der die Haltermodule (120) über die Gelenke (116) kippbar an der Basis so befestigt sind, dass
Verkippungen aller Haltermodule (120) über die Gelenke (116) miteinander gekoppelt sind, so dass jedes Anschlussstück (28) gleichermaßen verkippt wird und Zentren der Anschlussstücke (28) koplanar zueinander bleiben; oder
Verkippungen aller Haltermodule (120) einer ersten Gruppe (26a) über ihre Gelenke (116) miteinander und Verkippungen aller Haltermodule (120) einer zweiten Gruppe über ihre Gelenke (116) miteinander gekoppelt sind, so dass innerhalb jeder Gruppe jedes Anschlussstück gleichermaßen verkippt wird und Zentren der Anschlussstücke koplanar zueinander bleiben.

12. Verfahren zum Justieren eines Kamerasystems aus einer Mehrzahl von Kameras mit wechselbaren Objektiven, mit
Platzieren (56) einer Justierhilfe gemäß Anspruch 5, so dass die Mehrzahl von zueinander identischen Anschlussstücken jeweils eine Verbindung, Passung oder Klemmung mit einer Objektiv/Kameragehäuse-Schnittstelle eines Kameragehäuses oder eines Objektivs der Mehrzahl von Kameras aufweist.

13. Verfahren gemäß Anspruch 12, das ferner folgende Schritte aufweist:
Fixieren (60) der Kameragehäuse oder Objektive; und
Entfernen (62) der Justierhilfe in einem Zustand, bei dem die Kameragehäuse oder Objektive fixiert sind.

14. Kamerasystem mit
einer Mehrzahl von Kameras mit wechselbaren Objektiven;
einem Halter mit einer Mehrzahl von zueinander identischen Anschlussstücken, die als Objektiv/Kameragehäuse-Schnittstellen-Anschlussstücke jeweils zur Verbindung, Passung oder Klemmung mit einem Gegenstück eines Kameragehäuses oder eines Objektivs einer Kamera ausgebildet sind, wobei der Halter derart ausgeführt ist, dass die Anschlussstücke oder Haltermodule des Halters, in denen die Anschlusstücke starr oder lediglich an Rotationsachsen gehaltert sind, zueinander entlang zumindest einer gemeinsamen Raumrichtung starr zueinander sind,
wobei der Halter eine Justierhilfe gemäß Anspruch 5 ist.

15. Kamerasystem gemäß Anspruch 14, das ferner eine Umlenkspiegelanordnung (12) aufweist,
wobei
die Umlenkspiegelanordnung (12) eine Mehrzahl von Spiegelsegmenten (16) aufweist, die gegenüber einer gemeinsamen Achse (18) geneigt sind, so dass für jedes Spiegelsegment (16) eine Gerade existiert, die senkrecht zu dem jeweiligen Spiegelsegment steht, wobei sich die Geraden in einem gemeinsamen Punkt entlang der gemeinsamen Achse (18) schneiden,
jedem Spiegelsegment (16) zumindest ein Anschlussstück zugeordnet ist, und
der Halter und die Umlenkspiegelanordnung relativ zueinander entlang der gemeinsamen Achse (18) verschiebbar geführt sind, so dass bei gegenseitiger Verschiebung virtuelle Eintrittspupillen der Kameras (10) auf einem gemeinsamen Kreis (25) um die gemeinsame Achse (18) mit einem Radius bleiben, der von der Verschiebung abhängt.

## Claims

1. Alignment aid for a camera system of cameras with exchangeable objectives comprising:
a holder (26) with a plurality of connecting pieces (28), each implemented for connecting or clamping with a camera housing (34) and/or objective (32), wherein the holder (26) is implemented such that the connecting pieces (28) or holder modules (120) of the holder, where the connecting pieces (28) are held rigidly or merely at rotation axes (118), are held rigidly with respect to one another along at least one common spatial direction (46),
**characterized in that** the connecting pieces (28) are objective/camera housing interface connecting pieces (88) for connecting with one counterpart (80) each of a camera housing (34) or an objective (32), or connecting pieces (38; 100) for fitting or clamping with an objective/camera housing interface between the objective and the camera housing of a respective camera.

2. Alignment aid according to claim 1, wherein the holder (26) is implemented in a rigid manner between the connecting pieces (28).

3. Alignment aid according to claim 1 or 2, wherein the connecting pieces (28) are oriented symmetrically or in pairs around a rotation axis (46) in a rotation-invariant manner to one another and/or centers of the connecting pieces are arranged in a coplanar (48) manner.

4. Alignment aid according to any of claims 1 to 3, wherein the connecting pieces (28) are identical to one another.

5. Alignment aid according to any of the previous claims, wherein the cameras comprise a C Mount, CS Mount, PL Mount, Arri Standard, Arri Bayonet, Aeton Universal, B4, BNCR, S, CA, PV or FZ connection system.

6. Alignment aid according to claim 1, wherein the holder has a modular structure of several holder modules (26a, 26b), each comprising one or several connecting pieces (28) differing from the other holder modules, wherein the holder modules are guided movably to one another such that each holder module maintains its position during projection onto an axis running in the common spatial direction (46).

7. Alignment aid according to claim 1 or 6, wherein the holder has a modular structure of several holder modules (26a, 26b), each comprising one or several connecting pieces (28) differing from the other holder modules, wherein the holder modules are guided movably to one another such that the holder modules move parallel, collinear and/or coplanar to one another during movement.

8. Alignment aid according to any of claims 1, 6 and 7, wherein the holder comprises a base where the holder modules (120) are mounted in a tilted manner via hinges (116), each comprising one of the connecting pieces (28), wherein the base is implemented such that rotation axes (118) of the hinges (116) are arranged rigidly to one another in the common spatial direction (46).

9. Alignment aid according to claim 8, wherein the base is implemented such that the rotation axes (118) of the hinges (116) are symmetrical or rotation-invariant in pairs around a rotation axis (46).

10. Alignment aid according to claim 8 or 9, wherein the base is implemented in a modular manner, such that the holder modules (120) are guided movably in a direction perpendicular to the common spatial direction.

11. Alignment aid according to any of claims 8 to 10, wherein the holder modules (120) are mounted on the base in a tiltable manner via the hinges (116) such that
tiltings of all holder modules (120) are coupled to one another via the hinges (116), such that each connecting piece (28) is equally tilted and centers of the connecting pieces (28) remain coplanar to one another; or
tiltings of all holder modules (120) of a first group (26a) are coupled to one another via their hinges (116), and tiltings of all holder modules (120) of a second group are coupled to one another via their hinges (116), such that within each group each connecting piece is equally tilted and centers of the connecting pieces remain coplanar to one another.

12. Method for aligning a camera system of a plurality of cameras with exchangeable objectives, comprising
positioning (56) an alignment aid according to claim 5, such that the plurality of connecting pieces identical to one another each comprise a connection, fitting or clamping with a camera housing or an objective of the plurality of cameras.

13. Method according to claim 12, further comprising:
fixing (60) the camera housing or objectives; and
removing (62) the alignment aid in a state where the camera housings or objectives are fixed.

14. Camera system, comprising
a plurality of cameras with exchangeable objectives;
a holder with a plurality of connecting pieces identical to another, each implemented for connecting, fitting or clamping with a counterpart of a camera housing or an objective of a camera, wherein the holder is implemented such that the connecting pieces or holder modules of the holder, where the connecting pieces are held rigidly or merely on rotation axes, are rigid to one another along at least one common spatial direction,
wherein the holder is an alignment aid according to 5.

15. Camera system according to claim 14, further comprising a deflection mirror arrangement (12),
wherein the deflection mirror arrangement (12) comprises a plurality of mirror segments (16) that are tilted with respect to a common axis (18), such that a straight line exists for each mirror segment (16), which is perpendicular to the respective mirror segment, wherein the straight lines intersect in a common point along the common axis (18),
at least one connecting piece is allocated to each mirror segment (16), and
the holder and the deflection mirror arrangement are guided in a shiftable manner relative to one another along the common axis (18), such that during mutual shift, virtual entrance pupils of the cameras (10) remain on a common circle (25) around the common axis (18) with a radius depending on the shift.

## Revendications

1. Gabarit pour l'ajustement d'un système de caméras composé de caméras à objectifs interchangeables, avec
un support (26) avec une pluralité de pièces de raccordement (28) qui sont conçues, chacune, en vue du raccordement à ou du serrage sur un boîtier de caméra (34) et/ou un objectif (32), le support (26) étant réalisé de sorte que les pièces de raccordement (28) ou les modules (120) du support dans lequel les pièces de raccordement (28) sont montées de manière rigide ou uniquement supportées sur des axes de rotation (118) soient supportés l'un par rapport à l'autre de manière rigide entre eux le long d'au moins une direction spatiale commune (46),
**caractérisé par le fait que** lesdites pièces de raccordement (28) comportent des pièces de raccordement d'interface objectif/boîtier de caméra (88) destinées au raccordement, chacune, à une pièce antagoniste (80) d'un boîtier de caméra (34) ou d'un objectif (32), ou des pièces de raccordement (38, 100) destinées à s'adapter ou être serrées sur une interface objectif/boîtier de caméra entre l'objectif et le boîtier d'une caméra respective.

2. Gabarit pour l'ajustement selon la revendication 1, dans lequel le support (26) est réalisé de manière rigide entre les pièces de raccordement (28).

3. Gabarit pour l'ajustement selon la revendication 1 ou 2, dans lequel les pièces de raccordement (28) sont alignées l'une par rapport à l'autre de manière symétrique ou de manière invariable en rotation par paire autour d'un axe de rotation (46) et/ou les centres des pièces de raccordement sont disposés dans un même plan (48).

4. Gabarit pour l'ajustement selon l'une des revendications 1 à 3, dans lequel les pièces de raccordement (28) sont identiques entre elles.

5. Gabarit pour l'ajustement selon l'une des revendications précédentes, dans lequel les caméras présentent un système de de raccordement C-Mount, un système de raccordement CS-Mount, un système de raccordement PL-Mount, un système de raccordement standard Arri, un système de raccordement à baïonnette Arri, un système de raccordement universel Aeton, un système de raccordement B4, un système de raccordement BNCR, un système de raccordement S, un système de raccordement CA, un système de raccordement PV ou un système de raccordement FZ.

6. Gabarit pour l'ajustement selon la revendication 1, dans lequel le support est construit modulaire à partir de plusieurs modules de support (26a, 26b) qui présentent, chacun, une ou plusieurs pièces de raccordement (28) différentes des autres modules de support, dans lequel les modules de support sont guidés de manière mobile l'un par rapport à l'autre de sorte que chaque module de support conserve sa position lors d'une projection sur un axe s'étendant dans la direction spatiale commune (46).

7. Gabarit pour l'ajustement selon la revendication 1 ou 6, dans lequel le support est construit modulaire à partir de plusieurs modules de support (26a, 26b) qui présentent, chacun, une ou plusieurs pièces de raccordement (28) différentes des autres modules de support, dans lequel les modules de support sont guidés de manière mobile l'un par rapport à l'autre de sorte que les modules de support se déplacent, lors du déplacement, de manière parallèle, de manière colinéaire et/ou dans le même plan l'un par rapport à l'autre.

8. Gabarit pour l'ajustement selon l'une des revendications 1, 6 et 7, dans lequel le support présente une base à laquelle les modules de support (120) sont fixés de manière pivotable par l'intermédiaire d'articulations (116) qui présentent, chacune, l'une des pièces de raccordement (28), dans lequel la base est réalisée de sorte que les axes de rotation (118) des articulations (116) soient disposés de manière rigide l'un par rapport à l'autre dans la direction spatiale commune (46).

9. Gabarit pour l'ajustement selon la revendication 8, dans lequel la base est réalisée de sorte que les axes de rotation (118) des articulations (116) présentent une symétrie ou une invariabilité de rotation par paire entre eux autour d'un axe de rotation (46).

10. Gabarit pour l'ajustement selon la revendication 8 ou 9, dans lequel la base est réalisée modulaire, de sorte que les modules de support (120) soient guidés de manière mobile dans une direction perpendiculaire à la direction spatiale commune.

11. Gabarit pour l'ajustement selon l'une des revendications 8 à 10, dans lequel les modules de support (120) sont fixés de manière pivotable à la base par l'intermédiaire des articulations (116), de sorte que
les pivotements de tous les modules de support (120) par l'intermédiaire des articulations (116) soient couplés entre eux, de sorte que chaque pièce de raccordement (28) soit pivotée dans la même mesure et que les centres des pièces de raccordement (28) restent dans le même plan l'un par rapport à l'autre; ou
les pivotements de tous les modules de support (120) d'un premier groupe (26a) par l'intermédiaire de leurs articulations (116) et les pivotements de tous les modules de support (120) d'un deuxième groupe par l'intermédiaire de leurs articulations sont couplés entre eux (116), de sorte que dans chaque groupe chaque pièce de raccordement soit pivotée dans la même mesure et que les centres des pièces de raccordement restent dans le même plan l'un par rapport à l'autre.

12. Procédé pour ajuster un système de caméras composé d'une pluralité de caméras à objectifs interchangeables, avec le fait de placer (56) un gabarit d'ajustement selon la revendication 5, de sorte que la pluralité de pièces de raccordement identiques entre elles présentent, chacune, un raccordement, une adaptation à ou un serrage sur une interface objectif/boîtier de caméra d'un boîtier de caméra ou d'un objectif de la pluralité de caméras.

13. Procédé selon la revendication 12, présentant par ailleurs les étapes suivantes consistant à:
fixer (60) le boîtier de caméra ou l'objectif; et
éloigner (62) le gabarit d'ajustement dans un état où sont fixés les boîtiers de caméra ou les objectifs.

14. Système de caméras, avec
une pluralité de caméras à objectifs interchangeables;
un support avec une pluralité de pièces de raccordement identiques entre elles qui, en tant que pièces de raccordement d'interfaces objectif/boîtier de caméra, sont, chacune, conçues en vue d'un raccordement, d'une adaptation à ou d'un serrage sur une pièce antagoniste d'un boîtier de caméra ou d'un objectif d'une caméra, où le support est réalisé de sorte que les pièces de raccordement ou les modules du support dans lesquels les pièces de raccordement sont supportées de manière rigide ou uniquement supportées sur des axes de rotation, soient rigides entre eux dans au moins une direction spatiale commune,
dans lequel le support est un gabarit d'ajustement selon la revendication 5.

15. Système de caméra selon la revendication 14, présentant par ailleurs un aménagement de miroir de déviation (12),
dans lequel
l'aménagement de miroir de déviation (12) présente une pluralité de segments de miroir (16) qui sont inclinés par rapport à un axe commun (18), de sorte qu'il existe pour chaque segment de miroir (16) une ligne droite qui est perpendiculaire au segment de miroir respectif, où les lignes droites se coupent en un point commun le long de l'axe commun (18),
chaque segment de miroir (16) est associé à au moins une pièce de raccordement, et
le support et l'aménagement de miroir de déviation sont guidés de manière déplaçable l'un par rapport à l'autre le long de l'axe commun (18) de sorte que, en cas de déplacement, les pupilles d'entrée virtuelles des caméras (10) restent sur un cercle commun (25) autour de l'axe commun (18) d'un rayon qui dépend du déplacement.
